# EUROPEAN PATENT APPLICATION

(11) **EP 2 600 275 A1**
(43) Date of publication of application: **05.06.2013**
(21) Application number: 12186501.8
(22) Date of filing: 28.09.2012
(51) Int. Cl.: G06F 21/78, G06F 21/79

(54) **Method for accessing a secure storage, secure storage and system comprising the secure storage**

(30) Priority: 02.12.2011 US 201161566083 P; 20.12.2011 EP 11194700
(71) Applicant: NXP B.V., 5656 AG Eindhoven (NL)
(72) Inventor: Vijayshankar, Roshan, 5656 AG Eindhoven (NL); De Jong, Hans, 5656 AG Eindhoven (NL); Meyn, Hauke, 5656 AG Eindhoven (NL)
(74) Representative: Krott, Michel

(57) **Abstract**

It is described a method for accessing a secure storage of a mobile device, the method comprising: providing a generic interface for accessing the secure storage; accessing the secure storage using the generic interface by a first application of the mobile device; accessing the secure storage using the generic interface by a second application of the mobile device. Further, a corresponding secure electronic storage and a system is described.

## Description

### FIELD OF THE INVENTION

The present invention relates to a method for accessing a secure storage of a mobile device, to a secure electronic storage and to a system comprising a mobile device and the secure storage.

### BACKGROUND OF THE INVENTION

In communication technology, in particular mobile telephony, security may be of fundamental importance. In particular, a mobile device, such as a mobile phone, may comprise a secure storage, which may also be referred to as or embedded within a secure element (SE), in which sensitive data are stored which need to be protected from unauthorized access. In particular, the secure element may be capable of storing and handling business and personal information in a manner providing security, prohibiting access of an unauthorized attacker. In particular, the secure element may be embodied as an electronic chip, such as a smart card chip and the secure element may be embedded into the mobile handset at the time of manufacturing. Alternatively, the secure element may be implemented as a card, such as a SIM-card or a SD-card, which may be removed from the mobile handset.

In a conventional secure element particular auxiliary applications (each being associated to an application installed within the mobile device), in particular denoted as applets, can be installed, personalized and managed, preferably over the air. It may be possible to load applications from different service providers being associated with the different applications into a storage of the mobile phone or even in the storage provided by the secure element. Thereby, the secure element is configured using a combination of hardware, software, interfaces and data exchange protocols such as to enable secure storage of application specific data, in particular sensitive data related to application security and trustworthiness.

In the secure element, in particular in its secure storage, in particular identification information for identifying individuals and usage of credentials for payments, authentication and other services may be stored in a secure manner.

However, in a conventional secure element (SE) a number of stake holders, such as SE vendor, SE issuer, application issuer, trusted service manager (TSM) etc. may be involved in accessing the (data within the) secure element. For example, the SE issuer (also referred to as SE owner) may be the entity that sources the SE from the SE vendor, controls the SE root keys, brands the SE and provides it to the end consumer, such as a user of the mobile telephone. Thereby, the SE issuer may dominate the management over the keys for the secure element, without allowing another party to access the secure element, in particular to access the data in the secure element.

Only the SE issuer itself may be capable, in particular using difficult and complicated modification processes, to provide other application issuers, such as banks, transport authorities, or customer loyalty programs or even trusted service managers, access to the secure element which then in turn may provide the access to application issuers.

It has been observed, that the secure element, in particular its secure storage, may be restricted regarding accessing it, by the SE issuer. Thereby, problems evolve regarding the usability of the secure element and in particular also the capability of the associated mobile handset having only a restricted set of applications installed, which have access to the (data within the) secure element due to these complex and cumbersome adaptations of the secure element performable only by the involvement of the SE issuer.

There may be a need for a method for accessing a secure storage of a mobile device, for a secure electronic storage and for a system comprising a mobile device and the secure storage, wherein the disadvantages of the prior art are at least partially overcome. In particular, there may be a need for a secure element or a secure electronic storage and a method for accessing the secure storage, wherein capabilities of mobile devices using the secure storage are enhanced.

### OBJECT AND SUMMARY OF THE INVENTION

This need may be met by the subject-matter of the independent claims. The dependent claims specify particular embodiments of the present invention.

According to an embodiment of the present invention it is provided a method for accessing a secure storage of a mobile device, the method comprising: providing a generic interface for accessing the secure storage, accessing the secure storage using the generic interface by a first application of the mobile device, and accessing the secure storage using the generic interface by a second application of the mobile device.

The secure storage may be an electronic storage, such as a semiconductor material based storage, such as a combination of a ROM and a RAM, a chip card storage, a flash storage, a disc drive storage or the like. In particular, the secure storage may have a restricted storage capacity, such as between 10 kB and 10 MB, in particular between 100 kB and 2 MB. In particular, the secure storage may have a data storage capacity which is less than a storage space required to install the first application or the second application.

In particular, the secure storage may be embedded into a secure element providing a number of basic functionalities, such as cryptographic functionalities and data access functionalities.

The mobile device may in particular be a mobile phone, such as a Smartphone, a portable computer, such as a laptop computer, a computer pad, or the like. The mobile device may in particular be configured to communicate with base stations in a wireless manner, using electromagnetic waves for providing communication function to a user. The accessing the secure storage may comprise in particular retrieving data from the secure storage and/or storing data at the secure storage. In particular, the data may be related to sensitive data which need to be protected from unauthorized access.

The generic interface may have been implemented (in particular within the secure storage) in or during a manufacturing process, such that the generic interface may not be changeable after having manufactured the respective storage, in particular the secure storage, in which the generic interface is stored in a particular implementation. In particular, the generic interface, or a generic software module implementing the generic interface, may or may not be stored within the secure storage. For example, the generic software module implementing the generic interface may be stored in a general storage area (different or separated from the secure storage) of the mobile device. In other embodiments the generic software module implementing the generic interface is stored within the secure storage.

The generic interface may provide a (unique) set of access functions allowing a data exchange between the first application and the secure storage and allowing data exchange between the second application and the secure storage. Thereby, the first application may be different from the second application.

In particular, the first application as well as the second application may be installed in a general storage area of the mobile device. In particular, the general storage area of the mobile device may have a 10 times to 1000 times, in particular 100 times to 500 times, higher storage capacity than the capacity of the secure storage. The general storage area of the mobile phone may comprise a portion embedded into the mobile phone, such as a portion of a chip installed within the mobile phone, and may comprise or one or more removable portion(s), such as a storage card, such as an SD-card. The first application and/or the second application may enable to perform secure transactions requiring accessing the secure storage, such as payment transactions or the like.

The secure storage may be structured to provide distinct storage regions, such as a first storage region and a second storage region, wherein the first application accesses the first storage region (but is prohibited from accessing the second storage region) and the second application accesses the second storage region (but is prohibited from accessing the first storage region) of the secure storage, wherein the storage regions are distinct from each other.

By using only one generic interface, in particular being implemented by a generic software module, for enabling the first application to access the secure storage as well as to enabling the second application to access the secure storage, (possibly limited) storage space of the secure storage may be saved. Thus, it is not anymore required to install a first software module (or first applet) in the secure storage for allowing the first application to access the secure storage and it is not anymore necessary to install a second software module (or second applet) within the secure storage to allow the second application to access the secure storage. Instead, access from the first application as well as from the second application to the secure storage is enabled using the single generic interface.

Thereby, it may be enabled that more applications, in particular a plurality of applications which are installed in the mobile device may get access to respective storage regions within the secure storage, in order to appropriately perform their particular functionalities, in particular involving securities related transactions.

According to embodiments of the present invention basic functionalities of the secure storage, in particular the secure element, are opened to different applications that might need these functionalities. In particular, the secure storage, in particular the secure element, may store keys and data (of different applications) using a limited portion of the secure element or the secure storage. In particular, the different applications may be allowed access over the (contactless or wire based) generic interface to data stored in the secure storage in a secure way. Further, these applications may take advantage and/or use (via the generic interface) of the cryptographic functionalities of the secure storage or the secure element harboring the secure storage.

In particular, the applications may communicate with the secure storage using wireless technology, such as near-field communication (NFC), or wire based technology.

In particular, the first application as well as the second application may at least partially run in a server or computer or processor separate from the mobile phone and also separate from the secure storage, wherein another portion of the first application and the second application may be executing within a host of the mobile phone communicating with the external servers or computers.

According to an embodiment of the present invention the generic interface is implemented as a generic software module, in particular an applet, stored within the secure storage. In particular, any programming language, such as C, C++, Java, Perl, Fortran, Pascal, in particular any object oriented programming language, may be utilized for implementing the generic interface thus creating the generic software module. In particular, the generic software module may be or may comprise a Java card applet. Thereby, the generic software module may in particular use application protocol data unit (APDU). APDU is the communication unit between a smart card reader (such as a mobile phone) and a smart card, such as the secure element or the secure storage. The structure of the APDU may be defined by ISO/IEC 7816-4 or the version of ISO/IEC 7816 which is valid at the filing date (or priority date) of the present application.

In particular, the secure storage or the secure element harboring the secure storage may be a conventional secure storage or secure element, wherein the generic software module is installed or wherein the generic software module at least control access to the secure storage or the secure element (without being actually installed or stored within the secure storage).

The generic software module may in particular provide an open authentication and data environment of the secure element. In particular, a trusted service manager (TSM) may not be required for running or managing or handling the generic software module. Instead, the generic interface, in particular the implementing generic software module may in a generic way provide the opportunity or possibility for different applications to register with the generic software module such as to gain access to the secure storage. In particular, the generic interface may provide crypto services and authentication functionalities which may be interoperable between service providers being associated with the different applications installed or stored within the mobile phone or at least providing functionalities to the mobile phone.

In particular, the generic software module may provide physical and logical access control; time bound secure tokens (VPN keys, paid video streaming); software cloud-based tokens in conjunction with the secure element; gaming; and high value coupons, to just mention some possible examples.

In particular, when a new application, such as the second application, is to be installed to provide functionalities to the mobile device, the second application may require access to keys or application specific parameters or application specific data which are usually stored in a secure manner in the secure storage. In this case, the second application may utilize the generic interface, in particular implemented in the generic software module, to perform a registration process which then may result in granting access to the secure storage. Thus, the second application gains access to the secure storage. Thereby, extension of the mobile phone by using functionalities of new applications may be achieved in a simple way, thus enhancing the functionalities of the mobile device. Further, security of the installed application (or its functionalities) may be improved or enabled.

According to an embodiment of the present invention the generic software module is stored in a read-only portion of the secure storage. In particular, the secure storage may also comprise a read-write portion for storing data (but not program code for executing these applications) of the first application and/or the second application. The software instructions forming the generic software module may be stored during a manufacturing process of the secure storage, in particular the secure element. Afterwards, there may be no possibility to alter or change or delete the generic software module from the secure storage. Altering the generic software module may not be required, since the generic software module provides generic access (after corresponding registration and/or authentication) to a number of different applications via the generic interface.

By storing the generic software module in the read-only portion of the secure storage the generic software module may be protected from being occasionally deleted or altered, thereby improving reliability of the method and/or the secure element or secure storage.

According to an embodiment of the present invention the first application is not stored in the secure storage and the second application is not stored in the secure storage. Instead, the first application as well as the second application may be stored in a general storage area of the mobile device which may provide enough storage space for storing plural applications, such as 10 to 1000 applications, in particular 50 to 100 applications. By not storing the first application and not storing the second application in the secure storage, the storage space of the secure storage may be saved and may not be crowded by the voluminous application installations. Thereby, enough space may be provided within the secure storage in order to store more application specific data, such as application data for each of the applications stored in the mobile device.

According to an embodiment of the present invention the generic interface provides access functions comprising first access functions and second access functions for communicating with the secure storage, wherein the second access functions are invokable, by the first application, only after successfully invoking, by the first application, at least one of the first access functions, wherein the second access functions are invokable, by the second application, only after successfully invoking, by the second application, at least one of the first access functions.

The access functions may in general define (in particular high level) data exchange functions such that each of the access functions requires one or more arguments and returns one or more results or result objects. In particular, the first access functions may be required upon initial contact of the newly installed application with the generic interface. In particular, the first access functions may only be invoked once for a newly installed application. In contrast, the second access functions may enable data exchange functionalities which may be invoked frequently during operating the application. For example, one of the second access functions may be invoked for every transaction performed by a particular installed application, such as the first application or the second application.

Communicating may comprise (electronic) data exchange. The first access functions may register the first application and the second application to the secure interface or in particular to the generic software module. Thereby, in particular the first application and the second application may be associated with respective identification data. Thereby, the generic interface may be configured in a simple manner, while ensuring strict access control of the secure storage, in particular the secure element.

According to an embodiment of the present invention the first access functions comprise at least one of a registration function for generically registering the first application and the second application; and an authentication function for authenticating the first application and the second application. In particular, the registration function and/or the authentication function may comprise checking a certificate of the generic interface, or the generic software module, the certificate being associated with the secure storage, in particular the secure element. Thereby, although the secure storage, in particular the secure element, is opened up for allowing different applications to gain access to the secure storage, access to the secure storage may nevertheless strictly be controlled, in order to enhance the security, in particular of data stored within the secure storage.

According to an embodiment of the present invention the register function comprises a register initiation function and a register completion function, wherein the generic software module is associated with a private key and a public key, stored in the secure storage of the generic software module, wherein the public key is being used for signing a certificate of the generic software module, wherein during registration via the register initiation function the first application requests the certificate of the generic software module and sends it to a service provider associated with the first application who verifies the certificate using the public key of the generic software module.

Thereby, in particular a service provider may check or verify, whether the first application provided by the service provider is allowed to access data within the secure storage, in particular the secure element. Thereby, security may be improved.

According to an embodiment of the present invention upon successful verification of the certificate the first application stores first application data in the secure storage, the first application data being encrypted with the public key of the generic software module or the secure storage, the first application data comprising first service keys and/or first parameters.

In particular, the private key may only be known to the generic software module, while the public key may be known to other parties, in particular the service provider. The first application data may comprise data and keys which may be specific for the first application. The first application is encrypted with the public key of the generic software module. In other embodiments, the first application data are being encrypted by one or more keys specific for the first application.

The first application data may comprise any kind of data which is of use during performing the transaction by the first application, such as personal data, configuration data, encryption keys, decryption keys and the like.

Thereby, the registration process may be enhanced regarding security issues.

Upon successful registration the first application may receive a first reference handle, such as a pointer or address indicating quantity, which may be used by the first application later on to invoke one of the access functions, in particular one of the second access functions. Thereby, access of the application specific data within the secure storage may be simplified.

According to an embodiment of the present invention at least one portion of the first application data is associated with information indicating a (predetermined) life span of the portion of the first application data, wherein the portion is removed from the secure storage if the life span has expired. By removing the portion which life span is expired from the secure storage, (free) storage space of the secure storage may be re-established or extended. Thereby, data relating to other installed applications may be advantageously stored within the secure storage. Thereby again functionalities of the mobile device may be extended.

According to an embodiment of the present invention the second access functions comprise at least one of a data retrieval function for retrieving, by the first application, first application data from the secure storage and for retrieving, by the second application, second application data from the secure storage, wherein retrieval of the second application data by the first application is prohibited, wherein retrieval of the first application data by the second application is prohibited; and a data storage function for storing, in the secure storage, first application data by the first application and for storing, in the secure storage, second application data by the second application.

The data retrieval function and/or the data storage function may be invoked frequently by the first application and the second application during running the first application and the second application, in particular during performing a secure transaction. In particular, the first application may require the first application data to be properly executed. The same may hold for the second application.

The generic interface may be designed such that unauthorized data access by the first application to the second application data and by the second application to the first application data is prohibited. Thereby, security requirements may be met.

According to an embodiment of the present invention the first application data comprise at least one of first identification data for identifying the first application and first data and first keys resulting from functions performed by the generic interface and first service parameters for the first application and first macros for the first application.

The first identification data may comprise an ID, such as an alphanumeric sequence. The first data and first keys, the first service parameters and the first macros may simplify or enhance the functionality of the first application. Also the second application may have stored within the secure storage second application data.

According to an embodiment of the present invention the second access functions comprise at least one of a data encryption function for encrypting data, in particular for encrypting data associated with the first application using a first application key comprised in the first application data, in particular for encrypting data associated with the second application using a second application key comprised in the second application data; and a data decryption function for decrypting data, in particular at least one of the first application data and the second application data.

Encrypting or decrypting data may be required by the first application as well as by the second application. Thus, implementing these encryption/decryption functions within the generic software module, or within the generic interface, may reduce the complexity of the first application and the second application. In particular, these functionalities may be implemented only once within the generic software module and may be utilized or invoked by a number of different applications, such as the first application and the second application.

According to an embodiment of the present invention the second access functions comprise at least one of a data deletion function for deleting, by the first application, at least a portion of the first application data, and for deleting, by the second application, at least a portion of the second application data, wherein deletion of the second application data by the first application is prohibited, wherein deletion of the first application data by the second application is prohibited; and a key update function for updating a first public key of the first application and for updating a second public key of the second application; and a verify function; and a signing function.

A data deletion function may be advantageous to free the secure storage from data which are not needed anymore, for example if an application is deinstalled from the mobile phone or if the application does not require the data anymore for any other reason. The verifying function and the signing function may be advantageous for enhancing data security.

According to an embodiment of the present invention the generic interface utilizes a wireless or wire based communication procedure or technique between the secure storage and the first application and the second application. In particular, near-field communication (NFC) may be employed as wireless communication procedure, or any electromagnetic wave-based technology, such as RF-technology. Thereby, all kind of conventional communication procedures may be utilized or employed to take advantage of the functionality of the generic interface.

According to an embodiment of the present invention the generic interface is adapted to support secure transaction applications comprising at least one of a payment application, an access key application for accessing a physical facility, and a key handling function for handling a VPN key.

It should be understood that features, individually or in any combination, disclosed, described, mentioned or employed for a method for accessing in secure storage of a mobile device may also be applied to a secure electronic storage or a system comprising a mobile device and a secure storage, according to embodiments of the present invention, and vice versa.

According to an embodiment of the present invention it is provided a secure electronic storage (such as a semiconductor material based storage embedded in a mobile phone or a card-based storage, such as a SIM-card or a SD-card) in which a generic software module implementing a method for accessing a secure storage of a mobile device as described according to embodiments above is stored. The secure electronic storage may allow access to data stored within the secure electronic storage for a number of different applications which in particular successfully passed a registration process. Thereby, a flexibility of the secure electronic storage with respect to supporting a number of different applications may be enhanced.

According to an embodiment of the present invention the secure storage is comprised in at least one of a SIM-card, a general storage of the mobile device, and a SD-card. The SIM-card, and the SD-card may be communicatively coupled with the mobile device, in particular wire-based. In the mobile device, one or more applications, in particular the first application and the second application, may be installed or may be executing, at least partially. For executing the first application and the second application the mobile device may comprise a host processor comprising an arithmetic, logical unit and also a general storage space of the mobile device.

According to an embodiment of the present invention a system is provided which comprises a mobile device, in particular a mobile phone, which is capable to communicate with the secure storage as is described above according to embodiments of the present invention.

The aspects defined above and further aspects of the invention are apparent from the examples of embodiment to be described hereinafter and are explained with reference to these examples of embodiment.

### BRIEF DESCRIPTION OF THE DRAWINGS

The invention will be described in more detail hereinafter with reference to examples of embodiment but to which the invention is not limited.
Fig. 1 schematically illustrates a system according to an embodiment of the present invention;
Fig. 2 schematically illustrates a method according to an embodiment of the present invention during registration.

### DESCRIPTION OF EMBODIMENTS

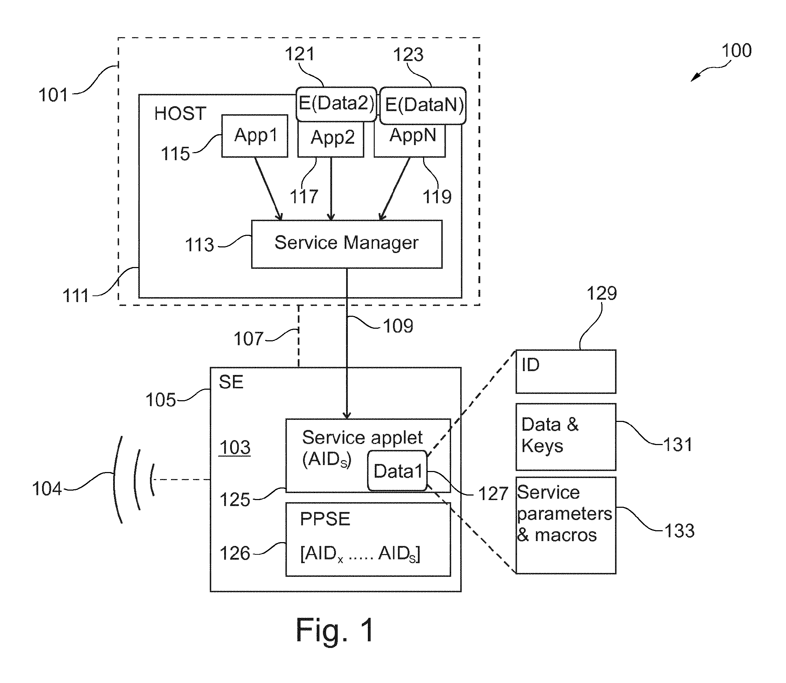

Fig. 1 schematically illustrates a system 100 according to an embodiment of the present invention. The system 100 comprises a mobile device 101 and a secure storage 103 which is here embedded in a secure element 105. The mobile device 101 is capable to communicate via one of the communication lines 107, 109 with the secure storage 103, in particular with the secure element 105. Thereby, the communication channel 107 represents a wireless communication channel, while the communication channel 109 represents a wire-based communication channel.

The mobile device 101, which may be for example a mobile phone, comprise a host processor 111 in which a service manager 113 is installed. Further, the host processor 111 has installed a first application 115, a second application 117 and a number of other applications, such as application AppN labelled by reference sign 119. The first application 115, the second application 117 and the further application 119 may have associated applications specific data 121, 123 which may be encrypted by a generic applet (also referred to as service applet, or as generic software module) which is comprised within the secure element 105 as the generic software module 125. The application 115, 117, 119 use services or functionalities of the service applet 125 over the contact interface 107 and/or the contactless interface 107.

The secure element further comprises the PPSE 126.

The applications 115, 117, 119 are in communication with the service manager 113 which in turn communicates to the service applet 125 for exchanging in particular encrypted data between the secure element 105 and the applications 115, 117, 119. The service applet 125 is in particular implemented or stored within the secure storage 103 in a read-only portion. The service applet 125 provides a generic interface for accessing the secure storage 103, wherein the access is provided to the applications 115, 117 and 119 executing in the host 111 of the mobile phone 101.

Thereby, the service applet comprises or manages or controls a data storage region 127 in which application specific data are stored. In particular, an identifier 129 of the registered application may be stored. Further, data and keys used in or resulting from the service applet services may be stored which are labelled with reference sign 131. Further, service parameters and macros 133 which are application specific may be stored within the storage region 127 controlled by the service applet 125. Thereby, the service parameters and macros 133 may describe or configure the functionality of the different applications 115, 117, 119 and the macros may be utilized by the different applications while performing different transactions, in particular security sensitive transactions.

In particular, the service applet 125 may be certified by the issuer of the secure element 105 or/and the vendor of the secure element 105. In particular, the service applet 125 may be preloaded into the ROM in a secure manner. Thereby, in particular no trusted service manager may be required for installation of the service applet 125 into the secure element 105. Multi-purpose use of the secure element 105 is enabled by the service applet 125 in that the first application 115, the second application 117 and the other application 119 is granted access to the secure storage 103 via the service applet 125. In particular, the service applet 125 may control or manage or administrate only data and/or key data of the particular applications 115, 117, 119, without storing the applications itself within the secure element 105. Any trusted service manager of the applications 115, 117, 119 or a service provider in particular being associated with a particular application may communicate with the service applet 125.

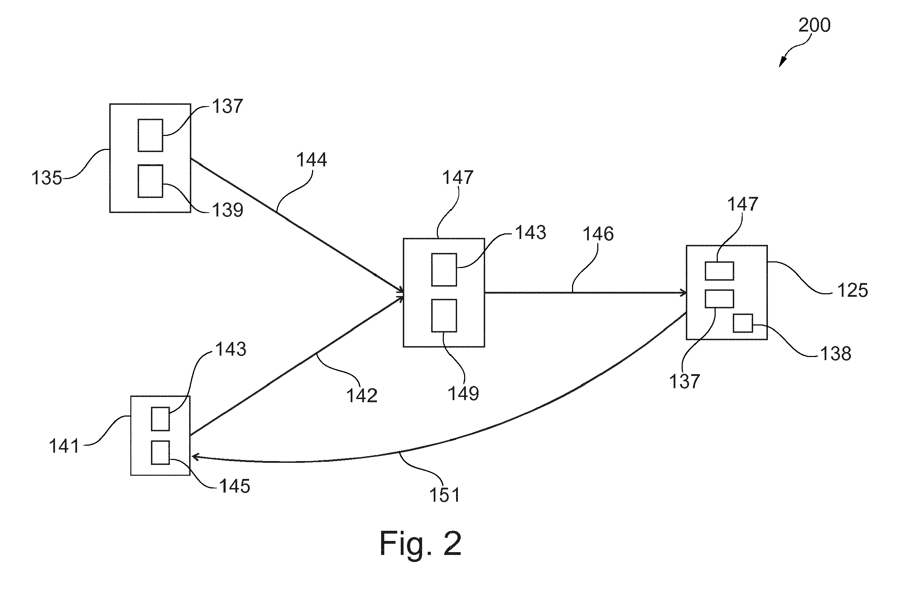

Fig. 2 schematically illustrates a registration process during a method according to an embodiment of the present invention.

The vendor 135 of the secure element 105 has a PKI key pair 137, 139. A service provider 141 (or an application, such as application 114, 117, 119 in Fig. 1, associated with the service provider 141) first needs to register with the generic applet 125. Thereby, the generic applet 125 will have the public key 137 of the secure element vendor 135 stored within itself and further the version number, for example. Initially (offline) there may be an approval and certifying process of the application provider 141, wherein also the privileges to be assigned to the application provider or service provider 141 would be decided. After approving and certifying the application provider/service provider 141 the service provider may generate its own key pair 143, 145.

The service provider 141 sends the public key 143 to the secure element vendor 135 for signing which is here illustrated in the service provider certificate 147. Thereby, the secure element vendor 135 provides its signature 149. Before signing the service provider certificate 147 the secure element vendor 135 will assign an ID to this service provider 141 and determine the privileges that can be assigned to the service provider 141. For reasons of export control it is provided that encryption/decryption is limited to those organizations that have been specifically authorized to use it. This information will be added to the service provider public key 143. The secure element vendor 135 will then sign it using its own private key 139.

When the application provider/service provider 141 communicates with the generic applet 125 for the first time (for registration) it will retrieve the service provider certificate 147 from the generic applet 125. The generic applet 125 will verify the signature 149 of the certificate 147 using public key 137. Then, the generic applet 125 will register this service provider information and generate a random service key. This key will be encrypted by using the service provider public key 137 and returned in the response message 151.

The service provider 141 will decrypt the message 151 to retrieve the service key. This key will then be used for subsequent mutual authentication of the service provider/application provider with the generic applet 125.

The generic applet 125 implements a generic interface for allowing the applications 115, 117, 119 access to the secure element 105, in particular to the secure storage 103. In particular, the generic applet 125 may execute encryption/decryption, signing, MAC related verification actions on data that the applications 115, 117, 119 send and refers to one of the keys that is loaded after mutual authentication or preventing the token that it obtained to prove that it is allowed to use the keys.

In particular, the secure element may implement the following access functions:
- [RandomKey]spPubKey InitRegisterSP( X509 Certificate )

The Certificate will have: SPId#; Access Previlieges; SP Pub Key.

All of the above will be signed with the SE vendor private key 137 and verified by the SE vendor public key 139. It will return a RandomSession Key.
- (Success / Failure) CompleteRegister( SPId, [SPServiceKey] RandomSessionKey )

The interface is to register a service provider (SP) to the generic Applet. After registration, the SP is granted a right to perform operation against the generic Applet. There may be two sets of privileges. The first is: retrieve data, load data, verify and sign. The second set includes everything above in addition to encrypt and decrypt.
- RetrieveData( )

This interface is to retrieve application data from the generic Applet. No secure session is needed for this command. The SP Id# that is mapped to the retrieved data record within the SP must be given.
- LoadData( )

This is to load an application object to a given Id# of a SP. If the index has already been occupied, this command will replace the existing object with the new object. This operation can only be performed after mutual authentication.
- Verify( )
- Sign( )
- Encrypt( )

This is to instruct the generic Applet to encrypt a given data using an application key installed by the SP.
- Decrypt( )

This is to instruct the generic Applet to decrypt a given data using an application key installed by the SP.
- UpdatePublicKey( [NewPubKey]oldPrivKey)
- DeleteData( SPId, [SPId]spsk )

According to an embodiment the generic applet 125 may be loaded into the ROM of the secure element 105 as a single instance and no involvement of a trusted service manager may be required.

The single generic applet 125 can host data and keys of registered applications 115, 117, 119 allowing multi-purpose use of the secure element 105. Thereby, the generic applet 125 may have its own private key 138 which is not known to other parties. The public key 137 of the generic applet 125 which is used for signing the certificates 14 is published to the outside world, such as to the service provider or service applications 141. The certificate 147 may be signed for example by the secure element vendor 135 using the public key.

The certificate 147 is then requested by the application (such as applications 115, 117, 119 illustrated in Fig. 1) and is then sent to the service provider or service application 141. The service provider 141 verifies the certificate 147 by using the published public key 137. If the certificate 147 is verified, the service provider 141 may use this public key to encrypt its initial data blob.

This data blob (such as data 127 in Fig. 1) may comprise its service keys along with certain parameters or rules (specific for the application) qualifying the use of the keys. One of the parameters could be the life span of the key which could be used to determine which keys might need to be replaced when swapping data (in or out of the secure element). The generic applet 125 may then return a token or reference which could be used later as a reference handle to service keys just loaded into the secure element 105. In particular, swapping data from/to the proper application (or the particular storage region within the secure element 105) is controlled by the service manager 113. In particular, one of the applications 115, 117, 119 may pass the reference token for verification, along with the data and the operation to be performed to the generic applet 125.

Then, the secure element, in particular the generic applet 125 may execute the requested operation (such as encrypt/decrypt/sign/MAC/etc.) or perform other requested actions on the data which one of the applications 115, 117, 119 sends.

In particular, special permissions may be required for authorizing certain operations such as encryption/decryption.

This could for example be achieved by the secure element vendor 135 generating a permission message that is signed with the SE vendor private key and provide this to each authorized party.

If the storage space of the secure element, in particular the secure storage 103, is out of space, keys could be replaced based on their life-span parameter or other algorithms such as LRU.

## Claims

1. Method for accessing a secure storage of a mobile device, the method comprising:
- providing a generic interface for accessing the secure storage;
- accessing the secure storage using the generic interface by a first application of the mobile device;
- accessing the secure storage using the generic interface by a second application of the mobile device.

2. Method according to claim 1, wherein the generic interface is implemented as a generic software module, in particular an applet, stored within the secure storage.

3. Method according to claim 2, wherein the generic software module is stored in a read-only portion of the secure storage.

4. Method according to claim 1, wherein the first application is not stored in the secure storage, wherein the second application is not stored in the secure storage.

5. Method according to claim 2, wherein the generic interface provides access functions comprising first access functions and second access functions for communicating with the secure storage,
wherein the second access functions are invokable, by the first application, only after successfully invoking, by the first application, at least one of the first access functions,
wherein the second access functions are invokable, by the second application, only after successfully invoking, by the second application, at least one of the first access functions.

6. Method according to claim 5, wherein the first access functions comprise at least one of:
- a registration function for generically registering the first application and the second application; and
- an authentication function for authenticating the first application and the second application.

7. Method according to claim 6,
wherein the register function comprises a register initiation function and a register completion function,
wherein generic software module is associated with a private key and a public key, stored in the secure storage, of the generic software module, wherein the public key is being used for signing a certificate of the generic software module,
wherein during registration via the register initiation function the first application requests the certificate of the generic software module and sends it to a service provider associated with the first application who verifies the certificate using the public key of the generic software module.

8. Method according to claim 7, wherein upon successful verification of the certificate the first application stores first application data in the secure storage, the first application data being encrypted with the public key of the generic software module, the first application data comprising first service keys and/or first parameters.

9. Method according to claim 8, wherein the generic software module returns, via the register completion function, a first reference handle to the first application based on which the first application is enabled to invoke the access functions and to access the first application data.

10. Method according to claim 8, wherein at least one portion of the first application data is associated with information indicating a life span of the portion of the first application data, wherein the portion is removed from the secure storage if the life span has expired.

11. Method according to claim 5, wherein the second access functions comprise at least one of:
- a data retrieval function for retrieving, by the first application, first application data from the secure storage and for retrieving, by the second application, second application data from the secure storage, wherein retrieval of the second application data by the first application is prohibited, wherein retrieval of the first application data by the second application is prohibited; and
- a data storage function for storing, in the secure storage, first application data by the first application and for storing, in the secure storage, second application data by the second application.

12. Method according to claim 11, wherein the first application data comprise at least one of:
- first identification data for identifying the first application; and
- first data and first keys resulting from functions performed by the generic interface; and
- first service parameters for the first application; and
- first macros for the first application.

13. Method according to claim 5, wherein the second access functions comprise at least one of:
- a data encryption function for encrypting data, in particular for encrypting data associated with the first application using a first application key comprised in the first application data, in particular for encrypting data associated with the second application using a second application key comprised in the second application data; and
- a data decryption function for decrypting data, in particular at least one of the first application data and the second application data;

14. Method according to claim 5, wherein the second access functions comprise at least one of:
- a data deletion function for deleting, by the first application, at least a portion of the first application data, and for deleting, by the second application, at least a portion of the second application data, wherein deletion of the second application data by the first application is prohibited, wherein deletion of the first application data by the second application is prohibited; and
- a key update function for updating a first public key of the first application and for updating a second public key of the second application; and
- a verify function; and
- a signing function.

15. Method according to claim 1, wherein the generic interface utilizes a wireless or wire based communication procedure between the secure storage and the first application and the second application.

16. Method according to claim 1, wherein the generic interface is adapted to support secure transaction applications comprising at least one of a payment application, an access key application for accessing a physical facility, and a key handling function for handling a VPN key.

17. A secure electronic storage in which a generic software module implementing a method according to one of the preceding claims is stored.

18. The Secure storage according to the preceding claim which is comprised in at least one of a SIM-card, a general storage of the mobile device, and a SD-card.

19. System comprising a mobile device capable to communicate with a secure storage according to claim 17.
